# EUROPEAN PATENT APPLICATION

(11) **EP 4 830 964 A1**
(43) Date of publication of application: **28.10.2026**
(21) Application number: 24905618.5
(22) Date of filing: 28.08.2024
(51) Int. Cl.: B60K 6/50, B60K 6/36, B60K 6/383, B60K 6/38

(54) **HYBRID POWER SYSTEM AND VEHICLE COMPRISING SAME**

(30) Priority: 22.12.2023 CN 202323542853 U
(71) Applicant: BYD Company Limited, Shenzhen, Guangdong 518118 (CN)
(72) Inventor: LI, Haijun, Shenzhen, Guangdong 518118 (CN); ZHU, Futang, Shenzhen, Guangdong 518118 (CN); WANG, Xinkui, Shenzhen, Guangdong 518118 (CN); ZHANG, Hui, Shenzhen, Guangdong 518118 (CN)
(74) Representative: Mathys & Squire
(86) International application number: PCT/CN2024/115139
(87) International publication number: WO 2025/130125

(57) **Abstract**

A vehicle (1000), comprising a hybrid power system (100). The hybrid power system (100) comprises an engine (1), a first coupling device (2), a first electric motor (3), a second electric motor (5), and a differential (4), wherein a first end of the first coupling device (2) is connected to the engine (1), the first electric motor (3) is connected to a second end of the first coupling device(2), the second electric motor (5) is connected to a third end of the first coupling device (2), and the differential (4) is connected to the third end of the first coupling device (2).

## Description

### CROSS-REFERENCE TO RELATED APPLICATIONS

The present disclosure claims priority to Chinese Patent Application No. 202323542853.1 filed on December 22, 2023, titled "HYBRID POWER SYSTEM AND VEHICLE COMPRISING SAME", which is incorporated herein by reference in its entirety.

### FIELD

The present application relates to the technical field of hybrid power systems, and in particular, to a hybrid power system and a vehicle comprising the same.

### BACKGROUND

With economic development, the market share of new energy vehicles has been increasing, and hybrid technology has become a research hotspot for various automobile manufacturers. Meanwhile, improving the power performance of hybrid vehicles is one of the key concerns of current automobile manufacturers. Therefore, how to improve power performance is an urgent technical problem to be solved at present.

### SUMMARY

The present application aims to solve at least one of the technical problems existing in the prior art. To this end, one object of the present application is to propose a hybrid power system that can select any one or more of the engine, the first motor and the second motor to output power according to different operating conditions, so that the hybrid power system can operate under all operating conditions.

Another object of the present application is to propose a vehicle adopting the above hybrid power system.

A hybrid power system according to an embodiment of the first aspect of the present application includes: an engine; a first coupling device, a first end of which is connected to the engine; a first motor, the first motor being connected to a second end of the first coupling device; a second motor, the second motor being connected to a third end of the first coupling device; and a differential, the differential being connected to the third end of the first coupling device.

According to the hybrid power system of the embodiment of the present application, by configuring the first coupling device to a decoupled state, the connection between the first motor and the engine is disconnected. Therefore, compared with traditional hybrid power systems, the hybrid power system of the present application can select any one or more of the engine, the first motor and the second motor to output power according to different operating conditions, realize uninterrupted switching between power generation and driving modes, and thus enable the hybrid power system to operate under all operating conditions.

According to some embodiments of the present application, the hybrid power system includes a second coupling device, a first end of which is connected to the second end of the first coupling device, and a second end of which is connected to the second motor.

According to some embodiments of the present application, the first coupling device and the second coupling device are arranged on different shafts.

According to some embodiments of the present application, the hybrid power system further includes a power input shaft connected to the engine, the first coupling device being arranged on the power input shaft; a power output shaft, the second coupling device being arranged on the power output shaft; and a first transmission gear pair, the first transmission gear pair being connected to the first motor and the second coupling device respectively.

According to some embodiments of the present application, the first transmission gear pair includes a first driving gear and a first driven gear that mesh with each other, the first driving gear being arranged on the power input shaft and connected to the first motor, and the first driven gear being arranged on the power output shaft and connected to the second coupling device.

According to some embodiments of the present application, the hybrid power system further includes a second transmission gear pair, the second transmission gear pair being connected to the second motor and the power input shaft respectively.

According to some embodiments of the present application, the second transmission gear pair includes a second driving gear and a second driven gear that mesh with each other, the second driven gear being arranged on the power output shaft and connected to the second motor, and the second driving gear being arranged on the power input shaft.

According to some embodiments of the present application, the first coupling device is a dual clutch, and/or the second coupling device is a synchronizer or a one-way clutch.

According to some embodiments of the present application, the hybrid power system further includes a transmission gear arranged on the power output shaft, and the transmission gear is connected to the differential.

According to some embodiments of the present application, the hybrid power system further includes a third driving gear arranged on the power input shaft; and a third driven gear arranged on the power output shaft, the third driven gear meshing with the third driving gear and being connected to the second coupling device.

A vehicle according to an embodiment of the second aspect of the present application includes the hybrid power system according to the above embodiment of the first aspect of the present application.

Additional aspects and advantages of the present application will be partially given in the following description, and some will become obvious from the description, or be learned through the practice of the present application.

### BRIEF DESCRIPTION OF THE DRAWINGS

The above and/or additional aspects and advantages of the present application will become apparent and readily comprehensible from the description of the embodiments in conjunction with the accompanying drawings, wherein:
FIG. 1 is a schematic diagram of a hybrid power system according to an embodiment of the present application;
FIG. 2 is a schematic diagram of the stationary power generation mode of the hybrid power system according to an embodiment of the present application;
FIG. 3 is a schematic diagram of the driving power generation mode of the hybrid power system according to an embodiment of the present application;
FIG. 4 is a schematic diagram of the parallel drive first gear mode of the hybrid power system according to an embodiment of the present application;
FIG. 5 is a schematic diagram of the parallel drive second gear mode of the hybrid power system according to an embodiment of the present application;
FIG. 6 is a schematic diagram of the parallel drive third gear mode of the hybrid power system according to an embodiment of the present application;
FIG. 7 is a schematic diagram of the series drive mode of the hybrid power system according to an embodiment of the present application;
FIG. 8 is a schematic diagram of the engine direct drive first gear mode of the hybrid power system according to an embodiment of the present application;
FIG. 9 is a schematic diagram of the engine direct drive second gear mode of the hybrid power system according to an embodiment of the present application;
FIG. 10 is a schematic diagram of the pure electric drive first gear mode of the hybrid power system according to an embodiment of the present application;
FIG. 11 is a schematic diagram of the pure electric drive second gear mode of the hybrid power system according to an embodiment of the present application;
FIG. 12 is a schematic diagram of the pure electric drive third gear mode of the hybrid power system according to an embodiment of the present application;
FIG. 13 is a schematic diagram of the braking energy recovery first gear mode of the hybrid power system according to an embodiment of the present application;
FIG. 14 is a schematic diagram of the braking energy recovery second gear mode of the hybrid power system according to an embodiment of the present application;
FIG. 15 is a schematic block diagram of a vehicle according to an embodiment of the present application.

### REFERENCE NUMERALS IN THE DRAWINGS

Vehicle 1000,
Hybrid Power System 100,
Engine 1, First Coupling Device 2, First Motor 3, Differential 4, Second Motor 5, Second Coupling Device 6, Power Input Shaft 7, Power Output Shaft 8, First Transmission Gear Pair 9, First Driving Gear 91, First Driven Gear 92, Second Transmission Gear Pair 10, Second Driving Gear 101, Second Driven Gear 102, Transmission Gear 11.

### DETAILED DESCRIPTION

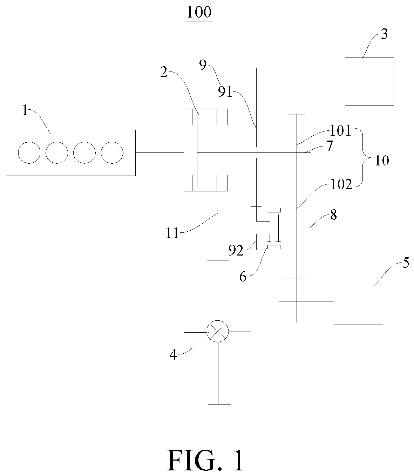

A hybrid power system 100 according to an embodiment of the first aspect of the present application will be described below with reference to FIGS. 1 to 14.

As shown in FIGS. 1 to 14, the hybrid power system 100 according to the embodiment of the first aspect of the present application includes an engine 1, a first coupling device 2, a first motor 3, a second motor 5, and a differential 4.

Specifically, the first end of the first coupling device 2 is connected to the engine 1. The first motor 3 is connected to the second end of the first coupling device 2. The second motor 5 is connected to the third end of the first coupling device 2. The differential 4 is connected to the third end of the first coupling device 2. For example, in the example of FIGS. 1 to 14, in the hybrid power system 100, both the first motor 3 and the second motor 5 are connected to the first coupling device 2, and the first coupling device 2 is further connected to the engine 1 as a power source and the differential 4 for transmitting power to the wheels. The first motor 3 may be a generator, configured to store electric energy in a battery, or supply electric energy to the second motor 5 to enable the second motor 5 to operate normally. The second motor 5 is a drive motor, to drive the vehicle to operate in a pure electric mode. Thereby, the structural complexity of the hybrid power system 100 is effectively reduced, the compactness of the hybrid power system 100 is improved, and the space occupied by the hybrid power system 100 is reduced. Both the first motor 3 and the second motor 5 are connected to the differential 4, and the differential 4 can transmit power to the wheels to drive the wheels to move, enabling the vehicle to travel at different speeds.

Specifically, when the first coupling device 2 is in the coupled state, the engine 1 is connected to the first motor 3. At this time, the power of the engine 1 can be transmitted to the first motor 3, which generates electricity and stores the electric energy in the battery. The engine 1 can participate in power output, that is, the engine 1 can cooperate with at least one of the first motor 3 and the second motor 5 (the engine 1 + the first motor 3, the engine 1 + the second motor 5, the engine 1 + the first motor 3 + the second motor 5) to realize power output for driving the wheels; or the engine 1 alone drives the wheels to move (i.e., pure fuel mode), which improves the power performance of the entire vehicle.

When the first coupling device 2 is in the decoupled state, the connection between the first motor 3 and the engine 1 is disconnected. At this time, the power of the engine 1 cannot be transmitted to the first motor 3, the first motor 3 cannot generate electricity, the engine 1 does not participate in power output, and the vehicle can operate in the pure electric mode, that is, both the first motor 3 and the second motor 5 can participate in power output. Therefore, the hybrid power system 100 can select any one or more of the engine 1, the first motor 3 and the second motor 5 to output power according to different operating conditions, thereby realizing the full-condition operation of the hybrid power system 100.

In addition, when the first coupling device 2 is in the decoupled state, if the vehicle is braked, the differential 4 can transmit the energy generated by the wheels to the first motor 3 or the second motor 5. For example, the energy generated by the vehicle can be recovered only by the second motor 5, or by dual motors (i.e., the first motor 3 and the second motor 5). Thereby, the economic performance of the hybrid power system 100 and the regenerative braking effect of the hybrid power system 100 are improved.

The hybrid power system 100 according to the embodiment of the present application is configured by connecting the first coupling device 2 to the engine 1, the first motor 3 and the second motor 5 respectively. Therefore, compared with traditional hybrid power systems, the hybrid power system 100 can select any one or more of the engine 1, the first motor 3 and the second motor 5 to output power according to different operating conditions, realize uninterrupted switching between power generation and driving modes, and thus enable the hybrid power system 100 to operate under all operating conditions.

According to some embodiments of the present application, as shown in FIGS. 1 to 14, the hybrid power system 100 further includes a second coupling device 6. The first end of the second coupling device 6 is connected to the second end of the first coupling device 2, the second end of the second coupling device 6 is connected to the second motor 5, and the second coupling device 6 is located between the first coupling device 2 and the second motor 5.

Specifically, the second coupling device 6 may be configured to: when in the decoupled state, disconnect the connection between the first motor 3 and the differential 4. That is to say, when the second coupling device 6 is in the coupled state, the first motor 3 is connected to the differential 4. At this time, at least one of the engine 1, the first motor 3 and the second motor 5 provides driving force, and the driving force is transmitted to the differential 4 to drive the vehicle to travel, improving the power performance of the vehicle. When the second coupling device 6 is in the decoupled state, the connection between the first motor 3 and the differential 4 is disconnected. At this time, the power of the first motor 3 cannot be transmitted to the differential 4, that is, the first motor 3 cannot participate in power output. At this time, at least one of the engine 1 and the second motor 5 provides driving force to drive the vehicle to travel, which can reduce the drag torque of the entire vehicle and improve the economic performance while ensuring the power performance of the vehicle.

Specifically, when the first coupling device 2 is in the coupled state, the second coupling device 6 may be in the coupled state, or the second coupling device 6 may be in the decoupled state.

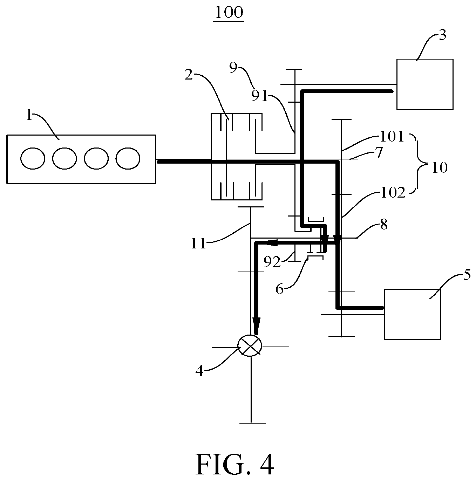

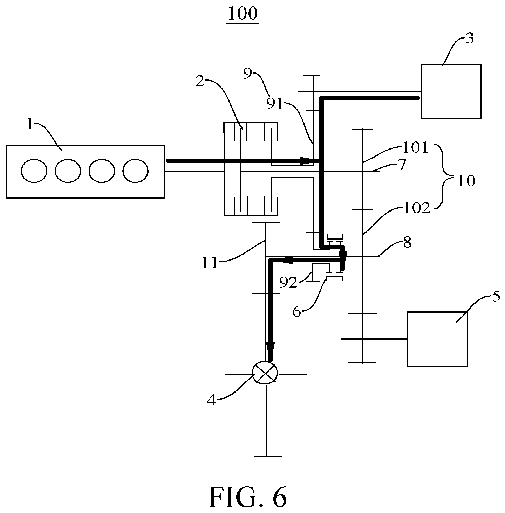

When the first coupling device 2 is in the coupled state and the second coupling device 6 is also in the coupled state, the first motor 3 is connected to both the engine 1 and the differential 4. While the engine 1 participates in driving, the first motor 3 switches from the power generation mode to the driving mode and participates in power output (see FIG. 4); or while the engine 1 participates in driving, both the first motor 3 and the second motor 5 switch to the driving mode to participate in power output (see FIG. 6).

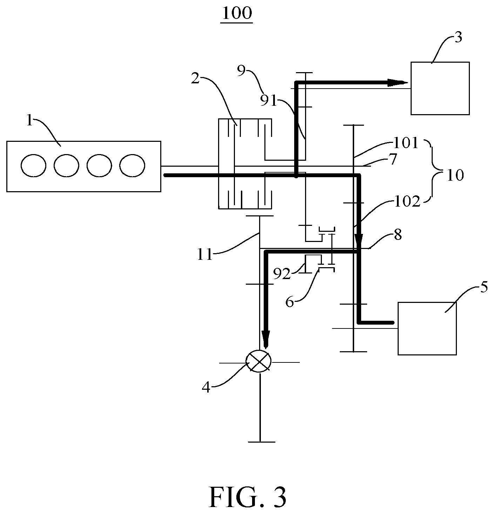

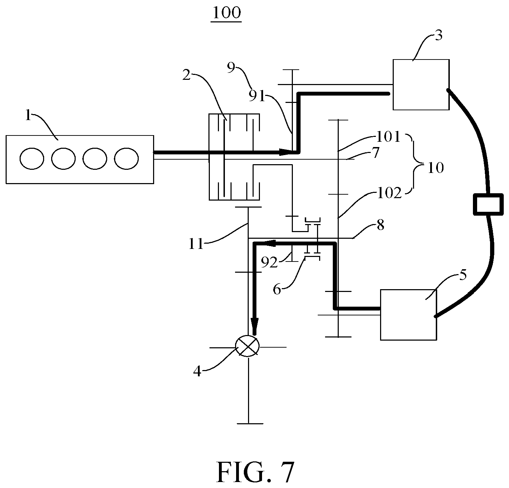

When the first coupling device 2 is in the coupled state and the second coupling device 6 is in the decoupled state, the first motor 3 is connected to the engine 1, but the connection between the first motor 3 and the differential 4 is disconnected. At this time, the first motor 3 does not participate in power output (see FIGS. 3 and 7). A part of the power of the engine 1 is transmitted to the first motor 3, driving the first motor 3 to generate electricity and store it in the battery, and the other part of the power of the engine 1 can cooperate with the second motor 5 to jointly drive the vehicle to operate; or the power output by the engine 1 drives the first motor 3 to generate electricity, and the first motor 3 transmits the electric power to the second motor 5, so that the second motor 5 drives the wheels to rotate.

When the first coupling device 2 is in the decoupled state, the second coupling device 6 may be in the coupled state, or the second coupling device 6 may be in the decoupled state.

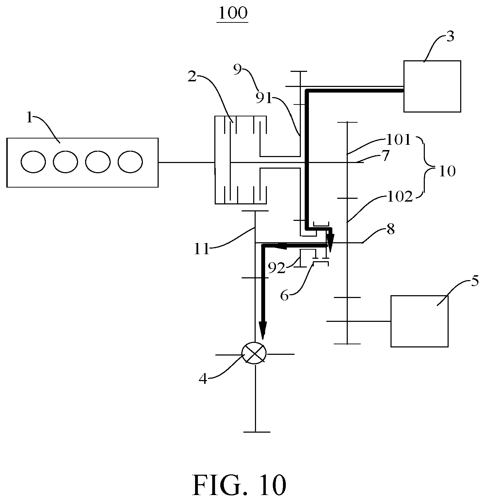

When the first coupling device 2 is in the decoupled state and the second coupling device 6 is in the coupled state, the connection between the first motor 3 and the engine 1 is disconnected, the first motor 3 is connected to the differential 4, and the first motor 3 is in the driving mode, which can separately drive the vehicle to operate (see FIG. 10), that is, the vehicle operates in the pure electric mode; or the first motor 3 and the second motor 5 cooperate to jointly drive the vehicle to operate, that is, the vehicle operates in the pure electric mode.

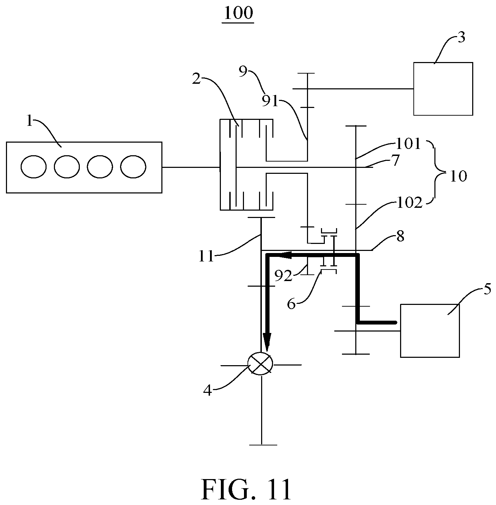

When the first coupling device 2 is in the decoupled state and the second coupling device 6 is also in the decoupled state, the connection between the first motor 3 and both the engine 1 and the differential 4 is disconnected, and the second motor 5 alone drives the vehicle to operate (see FIG. 11).

In this way, the engine 1 can drive the vehicle alone, or the engine 1 cooperates with any one of the first motor 3 and the second motor 5 to drive the vehicle; alternatively, the engine 1, the first motor 3 and the second motor 5 drive the vehicle simultaneously; or at least one of the first motor 3 and the second motor 5 drives the vehicle to operate in the pure electric mode, thus realizing multi-gear output of the hybrid power system 100. This can keep the engine 1 operating in the high-efficiency range at different vehicle speeds, and improves the power performance and economy of the hybrid power system.

Especially, by adopting the second coupling device 6 for gear shifting, the problem of power interruption during gear shifting can be avoided. Moreover, the second coupling device 6 controls the connection between the first motor 3 and the differential 4, which can improve the shifting smoothness. In addition, the combination of the first coupling device 2 and the second coupling device 6 enables rapid switching between the power generation function and the driving function of the first motor 3, thereby further improving the power performance of the hybrid power system 100.

Further, as shown in FIGS. 1 to 14, the first coupling device 2 and the second coupling device 6 are arranged on different shafts. For example, the first coupling device 2 is arranged on the power input shaft 7, and the second coupling device 6 is arranged on the power output shaft 8. The power output shaft 8 is connected to the wheels via the differential 4, for transmitting power to the wheels to drive the vehicle to travel; alternatively, the first coupling device 2 is arranged on the power output shaft 8, and the second coupling device 6 is arranged on the power input shaft 7 (not shown in the figures).

With such arrangement, the first coupling device 2 and the second coupling device 6 are spaced apart, so as to avoid interference between the first coupling device 2 and the second coupling device 6, improve the control efficiency of the first coupling device 2 and the second coupling device 6, further enhance the smoothness of the hybrid power system 100 during gear shifting, and improve the operation stability of the hybrid power system 100.

Still further, as shown in FIGS. 1 to 14, the hybrid power system 100 further includes a power input shaft 7, a power output shaft 8 and a first transmission gear pair 9. The power input shaft 7 is connected to the engine 1, and the first coupling device 2 is arranged on the power input shaft 7. The second coupling device 6 is arranged on the power output shaft 8. The axes of the power input shaft 7 and the power output shaft 8 are parallel to each other, so that the first coupling device 2 and the second coupling device 6 are arranged in a staggered configuration, thereby improving the control efficiency of the first coupling device 2 and the second coupling device 6, and further enhancing the smoothness of the hybrid power system 100 during gear shifting.

The power input shaft 7 connects the engine 1 and the first coupling device 2, and can disconnect the connection between the engine 1 and the first motor 3 when the first coupling device 2 is in the decoupled state. The power output shaft 8 connects the differential 4 and the second coupling device 6, and can disconnect the connection between the first motor 3 and the differential 4 when the second coupling device 6 is in the decoupled state. At the same time, this arrangement helps to reduce the connection distance between the first coupling device 2 and the engine 1, as well as the connection distance between the wheels and the second coupling device 6, further improves the compactness of the hybrid power system 100, reduces the space occupied by the hybrid power system 100, and facilitates the miniaturization design of the hybrid power system 100.

The first transmission gear pair 9 is connected to the first motor 3 and the second coupling device 6 respectively. The first transmission gear pair 9 is used to realize the connection between the second coupling device 6 and the first motor 3. That is, when the second coupling device 6 is in the coupled state, the second coupling device 6 is engaged with the first transmission gear pair 9, and the power of the first motor 3 can be transmitted to the power output shaft 8 via the first transmission gear pair 9, thereby facilitating the transmission of the rotation speed and torque of the first motor 3 to the power output shaft 8, improving the shifting smoothness of the hybrid power system 100, and further enhancing the power performance of the hybrid power system 100.

Especially, as shown in FIGS. 1 to 14, the first transmission gear pair 9 includes a first driving gear 91 and a first driven gear 92 meshed with each other. The first driving gear 91 is arranged on the power input shaft 7 and connected to the first motor 3, and the first driven gear 92 is arranged on the power output shaft 8 and connected to the second coupling device 6. That is to say, the second coupling device 6 and the first motor 3 can be connected through the first driving gear 91 and the first driven gear 92 meshed with each other. When the first motor 3 is switched to the driving mode, the driving force of the first motor 3 can be transmitted to the first driving gear 91, the first driving gear 91 drives the first driven gear 92 to rotate, and whether the power of the first driven gear 92 is transmitted to the differential 4 is determined according to the state of the second coupling device 6.

When the second coupling device 6 is in the coupled state, the first driven gear 92 is adapted to transmit the driving force to the power output shaft 8, that is, the driving force of the first motor 3 can be transmitted to the wheels to drive the wheels to rotate, and the hybrid power system 100 has high operation intensity and reliability; when the second coupling device 6 is in the decoupled state, the driving force of the first motor 3 cannot be transmitted to the wheels, so the first motor 3 is in the disengaged state, which can reduce the drag torque of the vehicle and improve the economic performance of the hybrid power system 100.

According to some embodiments of the present application, as shown in FIGS. 1 to 14, the hybrid power system 100 further includes a second transmission gear pair 10, and the second transmission gear pair 10 is connected to the second motor 5 and the power input shaft 7 respectively. Thereby, the power of the power input shaft 7 can be conveniently transmitted to the second motor 5 and the power output shaft 8 via the second transmission gear pair 10, and meanwhile the power of the second motor 5 can also be transmitted to the power output shaft 8. Especially, the power of the power input shaft 7 can come from at least one of the engine 1 and the first motor 3. Thus, when the hybrid power system 100 operates, power can be transmitted to the wheels via the first transmission gear pair 9 or the second transmission gear pair 10. Since the transmission ratios of the first transmission gear pair 9 and the second transmission gear pair 10 are different, that is, the power transmitted to the vehicle is different, the vehicle can operate in different gears, effectively ensuring the power performance of the vehicle.

Further, as shown in FIGS. 1 to 14, the second transmission gear pair 10 includes a second driving gear 101 and a second driven gear 102 meshed with each other. The second driven gear 102 is arranged on the power output shaft 8 and connected to the second motor 5, and the second driving gear 101 is arranged on the power input shaft 7. During operation, the power of the power input shaft 7 can be transmitted to the second driven gear 102 through the second driving gear 101, and the second driven gear 102 is adapted to transmit the power to the power output shaft 8 to drive the wheels to rotate. The adoption of the second driving gear 101 and the second driven gear 102 ensures smooth power transmission of the hybrid power system 100.

According to some embodiments of the present application, the first coupling device 2 is a dual clutch. The dual clutch is composed of two sets of clutches, which work alternately to achieve gapless gear shifting. For example, one of the two sets of clutches may be connected to the engine 1 and the first driving gear 91, and the other of the two sets of clutches may be connected to the engine 1 and the power input shaft 7. In this case, the first coupling device 2 has three coupled states: when the first coupling device 2 is in the first coupled state, it is engaged with the first driving gear 91, and the power of the engine 1 can be transmitted to the first motor 3; when the first coupling device 2 is in the second coupled state, it is engaged with the power input shaft 7, and the power of the engine 1 can be transmitted to the second motor 5; when the first coupling device 2 is in the third coupled state, it is engaged with both the power input shaft 7 and the first driving gear 91, and the power of the engine 1 can be transmitted to both the first motor 3 and the second motor 5.

Thereby, the gear shifting time is shortened and the power interruption of the engine 1 is reduced. Meanwhile, the more direct gear shifting helps reduce power loss, thereby lowering the fuel consumption of the first coupling device 2. A synchronizer and a gear-shifting motor can be omitted, which not only retains the mode switching function of the first coupling device 2 but also reduces the cost of the hybrid power system 100.

In an embodiment, the first coupling device 2 may be a dry dual clutch or a wet dual clutch, but is not limited thereto.

The second coupling device 6 may be a synchronizer or a one-way clutch. A synchronizer enables gears to be meshed to engage smoothly after reaching the same rotational speed, avoiding impact and noise between gear teeth. Using a synchronizer as the second coupling device 6 facilitates smooth engagement of the gears to be meshed. A one-way clutch has a simple structure, and using a one-way clutch as the second coupling device 6 has a lower cost compared with a synchronizer, thereby improving the market competitiveness of the hybrid power system 100.

According to some embodiments of the present application, as shown in FIGS. 1 to 14, the hybrid power system 100 further includes a transmission gear 11 arranged on the power output shaft 8, and the transmission gear 11 is connected to the differential 4. With such arrangement, the cooperation between the transmission gear 11 and the differential 4 increases the meshing area between the power output shaft 8 and the differential 4, thereby enhancing the stability of power transmission from the power output shaft 8 to the differential 4 and improving the power transmission efficiency of the hybrid power system 100.

According to other embodiments of the present application, the hybrid power system 100 further includes a third driving gear and a third driven gear (not shown in the figures). The third driving gear is arranged on the power input shaft 7, the third driven gear is arranged on the power output shaft 8 and meshed with the third driving gear, and the third driven gear is connected to the second coupling device 6. Thereby, power can be transmitted between the power input shaft 7 and the power output shaft 8 through the third driving gear and the third driven gear. The cooperation of the third driving gear and the third driven gear with the first transmission gear pair 9 and the second transmission gear pair 10 helps realize three-gear power output of the engine 1, increase the output torque of the engine 1, further boost the vehicle power, and enable the vehicle to operate in more gears to ensure its dynamic performance, making the vehicle suitable for extreme climbing, 0 to 100 km/h acceleration, off-road and other conditions.

The hybrid power system 100 according to the present application has the following five operating modes:

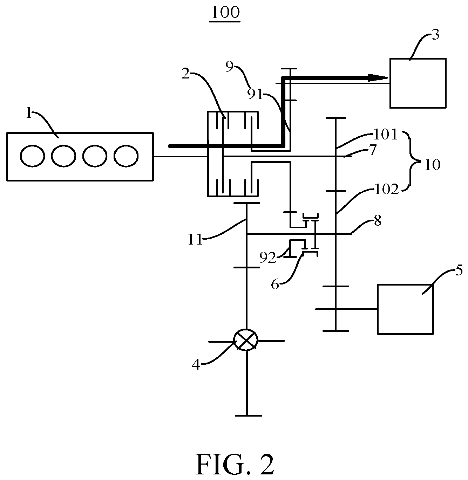

The first: stationary power generation mode. Referring to FIG. 2, the vehicle is stationary, the first coupling device 2 is in the first coupled state, and the second coupling device 6 is in the decoupled state. The power output by the engine 1 is transmitted to the first motor 3 through the first coupling device 2, driving the first motor 3 to generate electricity and store it in the battery. At this time, the second motor 5 stops operating and the vehicle remains stationary.

The second: driving power generation mode. The engine 1 drives the first motor 3 to generate electricity, and the second motor 5 propels the vehicle.

Referring to FIG. 3, the first coupling device 2 is in the third coupled state, and the second coupling device 6 is in the decoupled state. The first motor 3 is connected to the engine 1. Part of the power of the engine 1 is transmitted to the first motor 3 via the first driving gear 91, driving the first motor 3 to generate electricity and store it in the battery. Another part of the power of the engine 1 is transmitted to the power output shaft 8 along the power input shaft 7, the second driving gear 101 and the second driven gear 102, then to the differential 4 via the transmission gear 11 connected to the power output shaft 8, and finally to the wheels through the differential 4. Meanwhile, the second motor 5 operates and transmits power to the wheels through a pure electric drive path, i.e., the power of the second motor 5 is transmitted to the wheels via the power output shaft 8 and the differential 4. On the basis of the direct drive mode of the engine 1, the pure electric drive mode of the second motor 5 is added, so that the power of the engine 1 and the second motor 5 is superimposed and output, providing stronger power.

The third: parallel drive mode. While the engine 1 drives the vehicle, at least one of the first motor 3 and the second motor 5 provides auxiliary drive, realizing parallel drive of the engine 1 with the first motor 3 and/or the second motor 5 to meet the power demands of different modes.

The parallel drive mode is divided into parallel drive first gear mode, parallel drive second gear mode and parallel drive third gear mode.

As shown in FIG. 4, the first coupling device 2 is in the second coupled state, and the second coupling device 6 is in the coupled state. Both the first motor 3 and the second motor 5 participate in driving. The power of the first motor 3 is transmitted to the power output shaft 8 via the first driving gear 91 and the first driven gear 92, then to the differential 4 via the transmission gear 11, and finally to the wheels through the differential 4. The power of the second motor 5 is transmitted to the wheels via the second driven gear 102, the power output shaft 8 and the differential 4. Meanwhile, the engine 1 drives the second transmission gear pair 10 to rotate (i.e., engine direct drive mode) and transmits power to the wheels via the power output shaft 8 and the differential 4. Thereby, the parallel drive first gear mode is realized. On the basis of the direct drive mode of the engine 1, the dual-motor pure electric drive mode is added, so that the power of the engine 1, the first motor 3 and the second motor 5 is superimposed and output, providing stronger power. Thus, when the battery power is sufficient, the hybrid power system 100 can meet operating conditions such as starting, climbing, 0 to 100 km/h acceleration and high-speed overtaking, and exert the maximum dynamic performance of the entire vehicle.

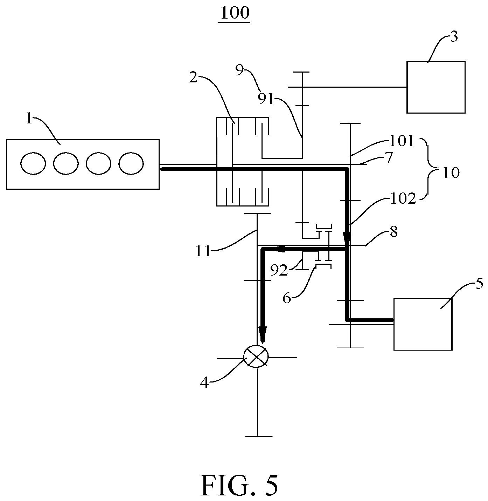

As shown in FIG. 5, the first coupling device 2 is in the second coupled state, and the second coupling device 6 is in the decoupled state. The second motor 5 operates and transmits power to the wheels through a pure electric drive path, i.e., the power of the second motor 5 is transmitted to the wheels via the second driven gear 102, the power output shaft 8 and the differential 4. Meanwhile, the engine 1 drives the second transmission gear pair 10 to rotate (i.e., engine direct drive mode) and transmits power to the wheels via the power output shaft 8 and the differential 4. Thereby, the parallel drive second gear mode is realized. The above hybrid power system 100 can reduce the drag torque of the entire vehicle and improve economic performance.

As shown in FIG. 6, the first coupling device 2 is in the second coupled state, and the second coupling device 6 is in the coupled state. The first motor 3 operates, and its power is transmitted to the power output shaft 8 via the first driving gear 91, the power input shaft 7 and the first driven gear 92, then to the differential 4 via the transmission gear 11, and finally to the wheels through the differential 4. Meanwhile, the engine 1 drives the first transmission gear pair 9 to rotate (i.e., engine direct drive mode) and transmits power to the wheels via the power output shaft 8 and the differential 4, realizing the parallel drive third gear mode. Thereby, the hybrid power system 100 can also reduce the drag torque of the entire vehicle and improve economic performance.

The fourth: series drive mode. The engine 1 drives the first motor 3 to generate electricity and drives the second motor 5 to operate. At this time, both the engine 1 and the second motor 5 participate in driving.

As shown in FIG. 7, the first coupling device 2 is in the third coupled state, and the second coupling device 6 is in the decoupled state. The power of the engine 1 drives the first motor 3 to generate electricity via the power input shaft 7 and the first driving gear 91. The first motor 3 drives the second motor 5 to operate. The power of the second motor 5 is transmitted to the power output shaft 8 via the second driven gear 102. The power output shaft 8 transmits power to the differential 4 via the transmission gear 11, and the power is finally transmitted to the wheels through the differential 4.

The fifth: engine 1 direct drive mode. Neither the first motor 3 nor the second motor 5 operates, and the vehicle is driven directly by the engine 1.

The engine 1 direct drive mode is divided into engine 1 direct drive first gear mode and engine 1 direct drive second gear mode.

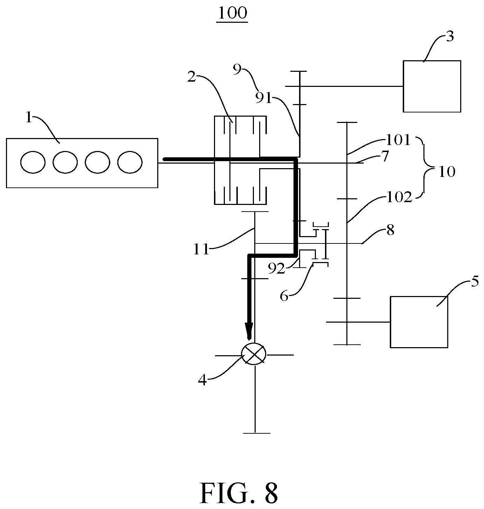

Referring to FIG. 8, the first coupling device 2 is in the second coupled state, and the second coupling device 6 is in the decoupled state. The power output by the engine 1 drives the first driving gear 91 and the first driven gear 92 to rotate through the power input shaft 7, and then transmits the power to the power output shaft 8. Afterwards, the power of the power output shaft 8 is transmitted to the differential 4 via the transmission gear 11, and finally to the wheels through the differential 4, realizing the engine 1 direct drive first gear mode, which meets the dynamic demand of the vehicle.

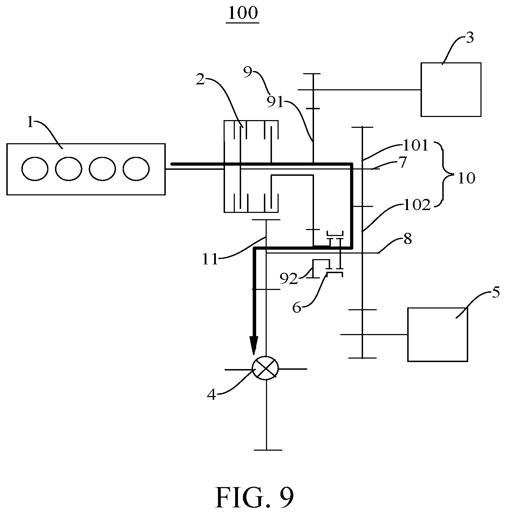

Referring to FIG. 9, the first coupling device 2 is in the second coupled state, and the second coupling device 6 is in the decoupled state. The power output by the engine 1 drives the second driving gear 101 and the second driven gear 102 to rotate through the power input shaft 7, and then transmits the power to the power output shaft 8. Afterwards, the power of the power output shaft 8 is transmitted to the differential 4 via the transmission gear 11, and finally to the wheels through the differential 4, realizing the engine 1 direct drive second gear mode, which meets the dynamic demand of the vehicle.

The sixth: pure electric drive mode. The engine 1 does not operate, and the vehicle is driven by the first motor 3 and/or the second motor 5. The pure electric drive mode has a large transmission ratio and excellent vehicle dynamic performance.

The pure electric drive mode is divided into pure electric drive first gear mode, pure electric drive second gear mode and pure electric drive third gear mode.

As shown in FIG. 10, the first coupling device 2 is in the decoupled state, and the second coupling device 6 is in the coupled state. The second motor 5 does not operate, and the battery supplies electric energy to the first motor 3 to drive the first motor 3 to rotate. The first motor 3 transmits power to the power output shaft 8 through the first driving gear 91 and the first driven gear 92. The power output shaft 8 transmits power to the differential 4 through the transmission gear 11, and finally transmits the power to the wheels through the differential 4, thereby realizing the pure electric drive first gear mode.

As shown in FIG. 11, both the first coupling device 2 and the second coupling device 6 are in the decoupled state. The first motor 3 does not operate, and the battery supplies electric energy to the second motor 5 to drive the second motor 5 to rotate. The second motor 5 transmits power to the power output shaft 8 through the second driven gear 102. The power output shaft 8 transmits power to the differential 4 through the transmission gear 11, and finally transmits the power to the wheels through the differential 4, thereby realizing the pure electric drive second gear mode.

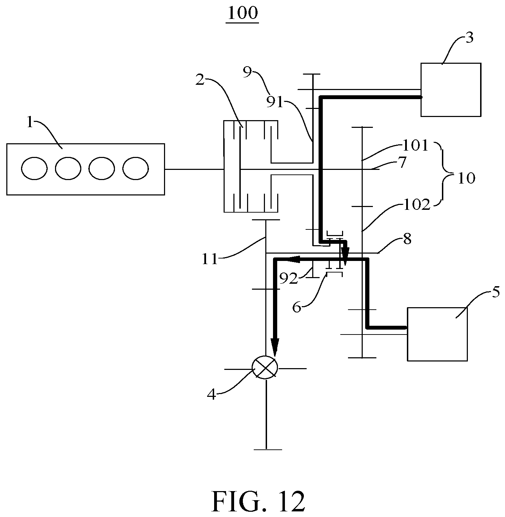

As shown in FIG. 12, the first coupling device 2 is in the first coupled state, and the second coupling device 6 is in the coupled state. The battery supplies electric energy to the first motor 3 and the second motor 5 to drive the first motor 3 and the second motor 5 to rotate. The first motor 3 transmits power to the power output shaft 8 through the first driving gear 91 and the first driven gear 92. The power output shaft 8 transmits power to the differential 4 through the transmission gear 11, and finally transmits the power to the wheels through the differential 4. The second motor 5 transmits power to the power output shaft 8 through the second driven gear 102, and the power output shaft 8 transmits power to the differential 4 through the transmission gear 11, thereby realizing the pure electric drive third gear mode.

The seventh: braking energy recovery mode. The vehicle is stationary, the engine 1 does not operate, and the energy from the wheels is transmitted to the first motor 3 or the second motor 5 to realize braking energy recovery, improving the economic performance of the hybrid power system 100.

The braking energy recovery mode is divided into braking energy recovery first gear mode and braking energy recovery second gear mode.

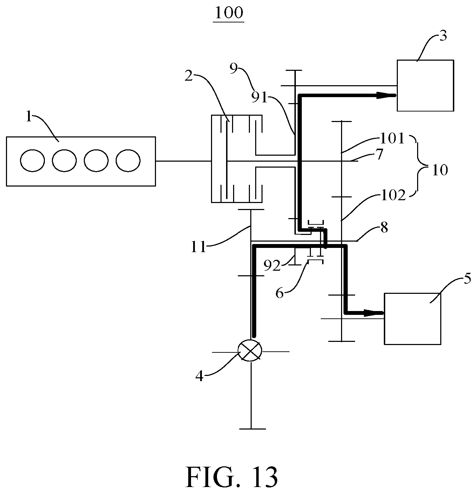

As shown in FIG. 13, the first coupling device 2 is in the decoupled state, and the second coupling device 6 is in the coupled state. At least part of the energy generated on the wheels during vehicle braking is recovered to the battery through the first motor 3 and the second motor 5. That is, the energy from the wheels is transmitted to the transmission gear 11 through the differential 4, and then to the power output shaft 8 through the transmission gear 11. The power output shaft 8 transmits part of the energy to the first motor 3 through the first transmission gear pair 9, driving the first motor 3 to generate electricity and store it in the battery. The power output shaft 8 transmits another part of the energy to the second motor 5 through the second driven gear 102, driving the second motor 5 to generate electricity and store it in the battery, thereby realizing the braking energy recovery first gear mode. Dual-motor energy recovery can effectively improve the economic performance and regenerative braking effect of the hybrid power system 100.

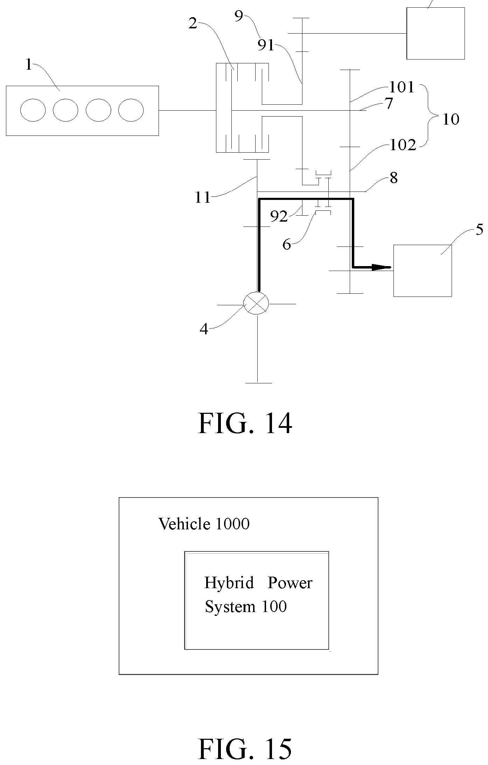

As shown in FIG. 14, both the first coupling device 2 and the second coupling device 6 are in the decoupled state. At least part of the energy generated on the wheels during vehicle braking is recovered to the battery only through the second motor 5. That is, the energy from the wheels is transmitted to the transmission gear 11 through the differential 4, and then to the power output shaft 8 through the transmission gear 11. The power output shaft 8 transmits the energy to the second motor 5 through the second driven gear 102, driving the second motor 5 to generate electricity and store it in the battery, thereby realizing the braking energy recovery second gear mode.

In addition, the hybrid power system 100 can switch between the series drive mode and the parallel drive mode, i.e., the vehicle transitions from a power generation condition to a full power output condition. During the intervention of the engine 1 in power output, the current overall vehicle torque output is determined. When the current battery power meets the current demand of the second motor 5, the first motor 3 switches from the power generation mode to the drive mode to compensate for the torque to be output by the engine 1, reduce the slope of the overall vehicle power torque variation, and realize smooth switching between the series drive mode and the parallel drive mode. The response speed of the first motor 3 and the second motor 5 is faster than that of the engine 1. The switching of the first motor 3 from power generation to drive can solve the problem of power lag during the switching between the series drive mode and the parallel drive mode.

Especially, the addition of a motor drive path enables the engine 1, the first motor 3 and the second motor 5 to all participate in power output, improving the power performance of the entire vehicle.

The battery power is represented by SOC (State of Charge). When SOC > 60%, the sum of the power of the first motor 3 and the power of the second motor 5 is less than the battery power, so that the hybrid power system 100 can select the parallel drive mode in which the engine 1, the first motor 3 and the second motor 5 participate together. When 20% < SOC < 60%, the battery power is equal to the power of the second motor 5, so that the hybrid power system 100 can select the parallel drive mode in which the engine 1 and the first motor 3 participate together. When SOC < 10%, the power of the first motor 3 is greater than the power of the second motor 5, or the power of the first motor 3 is less than or equal to the power of the engine 1, so that the hybrid power system 100 can select the engine direct drive mode. That is to say, without changing the power performance of the hybrid power system 100, the dual motors can reduce the power by approximately half.

Optionally, the second motor 5 may be a low-power motor, so as to reduce the size of the second motor 5, facilitate the arrangement of the second motor 5, and lower the cost of the second motor 5.

A vehicle 1000 according to an embodiment of the second aspect of the present application includes the hybrid power system 100 according to the above embodiment of the first aspect of the present application, as shown in FIG. 15.

With the vehicle 1000 according to the embodiment of the present application adopting the above hybrid power system 100, the operation mode of the vehicle 1000 can be switched under different operating conditions, realizing full-condition operation of the vehicle 1000, enhancing the driving experience of the vehicle 1000, and thus improving the market competitiveness of the vehicle 1000.

Other configurations and operations of the hybrid power system 100 and the vehicle 1000 according to the embodiments of the present application are known to those of ordinary skill in the art, and will not be described in detail herein.

In the description of the present application, it will be understood that the orientation or positional relationships indicated by the terms "upper", "lower", "front", "rear" are based on the orientation or positional relationships shown in the accompanying drawings, which are only for the convenience of describing the present application and simplifying the description, rather than indicating or implying that the referred device or element must have a specific orientation, be constructed and operated in a specific orientation, and therefore will not be construed as a limitation to the present application.

In the description of the present application, it will be noted that, unless otherwise explicitly specified and limited, the terms "installation", "connection", "connection" will be understood in a broad sense. For example, it may be a fixed connection, a detachable connection, or an integral connection; it may be a mechanical connection or an electrical connection; it may be a direct connection, or an indirect connection through an intermediate medium, or it may be the internal communication between two elements. Those of ordinary skill in the art will understand the specific meanings of the above terms in the present application according to specific circumstances.

In the description of the present specification, descriptions with reference to the terms "one embodiment", "some embodiments", "exemplary embodiment", "example", "specific example", or "some examples" mean that specific features, structures, materials or characteristics described in connection with the embodiment or example are included in at least one embodiment or example of the present application. In the present specification, the schematic expressions of the above terms do not necessarily refer to the same embodiment or example.

Although the embodiments of the present application have been shown and described, those of ordinary skill in the art will understand that various changes, modifications, substitutions and variations can be made to these embodiments without departing from the principle and purpose of the present application, and the scope of the present application is defined by the claims and their equivalents.

## Claims

1. A hybrid power system (100), comprising:
an engine (1);
a first coupling device (2), a first end of the first coupling device (2) being connected to the engine (1);
a first motor (3), the first motor (3) being connected to a second end of the first coupling device (2);
a second motor (5), the second motor (5) being connected to a third end of the first coupling device (2); and
a differential (4), the differential (4) being connected to the third end of the first coupling device (2).

2. The hybrid power system (100) according to Claim 1, further comprising:
a second coupling device (6), a first end of the second coupling device (6) being connected to the second end of the first coupling device (2), and a second end of the second coupling device (6) being connected to the second motor (5).

3. The hybrid power system (100) according to Claim 2, wherein the first coupling device (2) and the second coupling device (6) are arranged on different shafts.

4. The hybrid power system (100) according to Claim 2 or 3, further comprising:
a power input shaft (7), the power input shaft (7) being connected to the engine (1), and the first coupling device (2) being arranged on the power input shaft (7);
a power output shaft (8), the second coupling device (6) being arranged on the power output shaft (8); and
a first transmission gear pair (9), the first transmission gear pair (9) being connected to the first motor (3) and the second coupling device (6) respectively.

5. The hybrid power system (100) according to Claim 4, wherein the first transmission gear pair (9) comprises a first driving gear (91) and a first driven gear (92) meshed with each other, the first driving gear (91) is arranged on the power input shaft (7) and connected to the first motor (3), and the first driven gear (92) is arranged on the power output shaft (8) and connected to the second coupling device (6).

6. The hybrid power system (100) according to Claim 4 or 5, further comprising:
a second transmission gear pair (10), the second transmission gear pair (10) being connected to the second motor (5) and the power input shaft (7) respectively.

7. The hybrid power system (100) according to Claim 6, wherein the second transmission gear pair (10) comprises a second driving gear (101) and a second driven gear (102) meshed with each other, the second driven gear (102) is arranged on the power output shaft (8) and connected to the second motor (5), and the second driving gear (101) is arranged on the power input shaft (7).

8. The hybrid power system (100) according to any one of Claims 1 to 7, wherein the first coupling device (2) is a dual clutch, and/or
the second coupling device (6) is a synchronizer or a one-way clutch.

9. The hybrid power system (100) according to any one of Claims 4 to 7, further comprising:
a transmission gear (11), the transmission gear (11) being arranged on the power output shaft (8), and the transmission gear (11) being connected to the differential (4).

10. The hybrid power system (100) according to Claim 9, further comprising:
a third driving gear, the third driving gear being arranged on the power input shaft (7); and
a third driven gear, the third driven gear being arranged on the power output shaft (8), meshed with the third driving gear, and connected to the second coupling device (6).

11. A vehicle (1000), comprising the hybrid power system (100) according to any one of Claims 1 to 10.
